# EUROPÄISCHE PATENTSCHRIFT

(11) **EP 0 396 927 B1**
(45) Veröffentlichungstag und Bekanntmachung des Hinweises auf die Patenterteilung: **30.11.1994**
(21) Anmeldenummer: 90107049.0
(22) Anmeldetag: 12.04.1990
(51) Int. Cl.: H02G 3/06

(54) **Anschluss- bzw. Verbindungselement für Kabelbäume**
Connection, also junction element for cable harness
Elément de connexion, respectivement de liaison pour harnais de câbles

(30) Priorität: 06.05.1989 DE 3914933
(43) Veröffentlichungstag der Anmeldung: 14.11.1990
(73) Patentinhaber: Daimler-Benz Aerospace Airbus Gesellschaft mit beschränkter Haftung, 21129 Hamburg (DE)
(72) Erfinder: Kirma, Safa, D-2000 Wedel/Holstein (DE)
(74) Vertreter: Hansmann, Dierk, Dipl.-Ing.

(56) Entgegenhaltungen:
- CH-A- 526 215
- FR-A- 1 142 856
- GB-A- 2 016 215
- US-A- 4 671 598

## Beschreibung

Die Erfindung bezieht sich auf ein Formstück zur richtungsgebenden Führung flexibler, metallischer Leitungs-Schutzschläuche, wie Kabelbäume und dergleichen, insbesondere für den Einsatz in Flugzeugen als Schutz gegen elektromagnetische Einflüsse, das Formstück aus zwei Halbschalen mit einer Trennungsfuge im Bereich der Symmetrieebene gebildet ist und die Schalen durch mindestens ein Spannelement miteinander verbunden sind.

Bei der Verlegung von Kabelbäumen in Flugzeugen ist es als nicht druckschriftlich belegbarer Stand der Technik bekannt, je nach Erfordernis den Kabelbaum gegen Umgebungseinflüsse, wie insbesondere mechanische, chemische oder elektromagnetische Belastungen, durch entsprechende Schutzschläuche zu schützen. So werden in Bereichen der Fahrwerksgondeln verlegte Kabelbäume auch gegen Steinschlag, Hagel und dergleichen geschützt. Die Schutzschläuche sind dabei mit entsprechenden Anschluß- bzw. Verbindungselementen als Formstücke versehen. In Bereichen mit erhöhter Korrosionsgefahr sind die Schutzschläuche und Formstücke feuchtigkeitsgeschützt ausgeführt.

Zum Schutz gegen elektromagnetische Einflüsse werden die betreffenden Kabelbäume mit einer Abschirmung versehen, wie einem Metallgeflecht als Schutzschlauch. Die hierbei üblicherweise verwendeten Formstücke zum Anschluß bzw. zur Verbindung bestehen je nach Erfordernis aus Metall oder Kunststoff. Als metallische Werkstoffe kommen dabei insbesondere Aluminiumlegierungen und rostfreier Stahl in Betracht, wobei die Ausbildung aus Aluminiumlegierungen zwar Gewichtsvorteile bringt aber ein ungünstiges Korrosionsverhalten aufweisen. Demgegenüber zeigt rostfreier Stahl ein ausgezeichnetes Korrosionsverhalten, ist aber aus Gewichts- und Kostengründen sehr ungünstig.

Die Systematik und Gestaltung der Formstücke ist sehr aufwendig. Beispielsweise ist ein Formstück zum Anschluß eines abgeschirmten Kabelbaumes an einen Steckverbinder mit winkligem Kabelabgang als eine aus sieben unterschiedlichen Einzelteilen bestehende Baugruppe ausgebildet, wobei diese Teile bereits während der Zusammenstellung eines Kabelbaumes anzubringen sind. Bei stark verzweigten Kabelbäumen ist ein späterer Austausch der betreffenden Formteile nicht möglich. Ein weiterer Mangel besteht darin, daß der Leitungsschutzschlauch zur Abschirmung unterbrochen werden muß und kein durchgehenden elektrisch leitender Leitungsschlauch vorhanden ist.

Es sind nach der US-A-4 671 598 Anschluß- bzw. Verbindungselemente für die Enden von mehreren ankommenden Leitungen bekannt, um im wesentlichen die Leitungsbündel zu fixieren und über zusätzliche Ringe eine Abschirmung durchzuführen. Hierbei ist bereits bekannt, eine geteilte Schale zu verwenden und über eine Überwurfmutter eine Fixierung durchzuführen.

Auch nach der FR-A-1 142 856 und der CH-A-526 215 sind Anschluß- und Verbindungselemente aus Halbschalen bekannt geworden. Diese verbinden getrennte Führungskanäle und sind mit einer gattungsgemäßen Anordnung nicht vergleichbar. Es wird für den durchlaufenden Kanal keine Anordnung ohne Unterbrechung der elektrischen Verbindung gewährleistet.

Die Aufgabe der Erfindung besteht darin, ein gattungsgemäßes Formstück zu schaffen, daß eine individuelle Anpassung an den Verlauf des Schutzschlauches mit einer leichten Handhabung und einfachen Montage ermöglicht und niedrige Herstellkosten sowie eine Gewichtseinsparung ohne Unterbrechung der elektrischen Verbindung des Schutzschlauches gewährleistet.

Diese Aufgabe wird erfindungsgemäß dadurch gelöst, daß der durchlaufende Schutzschlauch von den beiden Halbschalen umgeben ist und Ihre Innenflächen im Klemmbereich in korrespondierend zum aufgenommenen, als Wellschlauch ausgebildeten Schutzschlauch derart ausgebildet sind, daß mindestens eine Wulst anliegend aufgenommen wird.

Dabei sind insbesondere von Vorteil, daß durch Anwendung der erfindungsgemäßen Formstücke eine automatisierte Kabelbaumfertigung ermöglicht und die elektrische Verbindung der Leitungs-Schutzschläuche nicht unterbrochen wird.

Vorteilhafte Weiterbildungen sind durch die Merkmale der Unteransprüche gekennzeichnet.

Die hierdurch erreichbaren Vorteile bestehen auch darin, daß die Formstücke nicht nur nach der Zusammenstellung der Kabelbäume sondern auch nach deren Installation im Flugzeug, etwa im Zuge von Wartungsarbeiten, anbringbar bzw. austauschbar sind.

In der Zeichnung sind Ausführungsbeispiele der Erfindung schematisch dargestellt. Es zeigen:
- Fig. 1: einen Steckverbinder als Krümmerausbildung,
- Fig. 2: eine weitere Ausführungsform gemäß Fig. 1,
- Fig. 3: eine Ausführungsform mit zwei Teilkrümmern,
- Fig. 4: eine weitere Krümmerausbildung mit einem Geflecht als Schutzschlauch,
- Fig. 5: eine weitere Ausführungsform mit einem Geflecht als Schutzschlauch,
- Fig. 6: einen Steckverbinder mit einem Formstück gleichzeitig als Endgehäuse,
- Fig. 7: eine Ausbildung als Verteilerstück,
- Fig. 8: eine weitere Ausführungsform als Verteilerstück mit einem Geflecht als Schutzschlauch,
- Fig. 9: eine weitere Ausführungsform als Verteilerstück mit einem Geflecht als Schutzschlauch,
- Fig. 10 und 11: Ausführungsformen als Muffe,
- Fig. 12: ein Formstück als Endbefestigung,
- Fig. 13: eine weitere Ausführungsform einer Muffe zur mechanischen und elektrischen Verbindung,
- Fig. 14: eine weitere Ausführungsform eines Formstückes als Endbefestigung,
- Fig. 15: Ausführungen von Halbschalenpaaren als Muffe in Anpassung an einen Wellschlauch,
- Fig. 16: eine Ausbildung eines Verteilerstückes entsprechend Fig. 7.
- Fig. 17: eine weitere Ausführung eines Verteilerstückes.

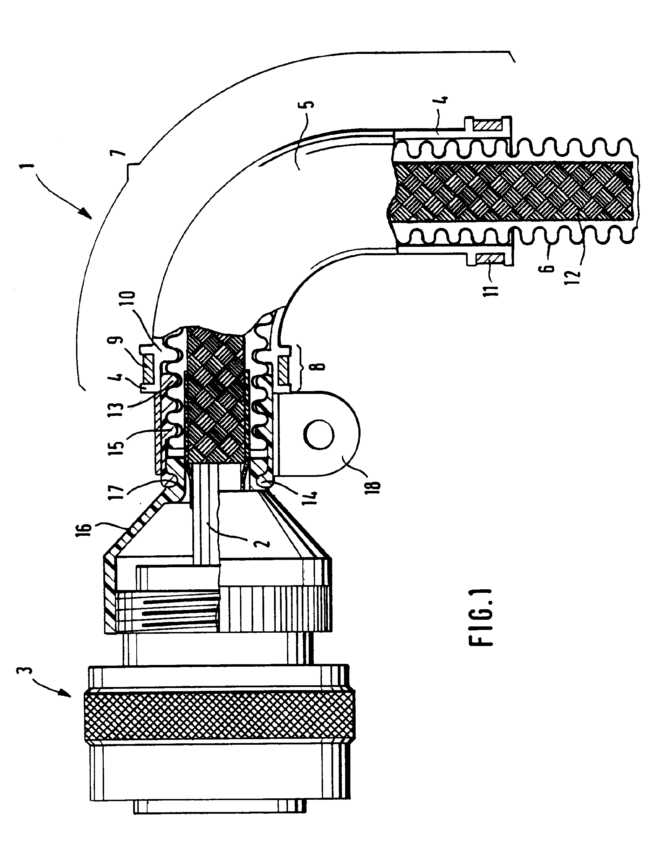

Bei der dargestellten Anordnung gemäß Fig. 1 ist ein Formstück als Verbindung eines Kabelbaumes 2 mit einem Steckverbinder 3 in Form eines Krümmers 1 gezeigt, der aus zwei Halbschalen 4 und 5 besteht. Die Teilfuge beider Halbschalen 4, 5 liegt im Bereich der Bildebene. Hierdurch ist in den aufgebrochen dargestellten Bereichen die unterhalb der Bildebene liegende Halbschale 4 sichtbar, während in dem nicht gebrochen dargestellten Bereich die obere Halbschale 5 in der Ansicht erscheint. Der Krümmer 1 besitzt mit dem Schutzschlauch 6 einen Überlappungsbereich 7. Innerhalb eines Klemmbereiches 8 ist der Krümmer 1 mit der Hülle 6 mittels eines Kabelbinders 9 verbunden. Der Kabelbaum 2 ist durch ein zusätzliches Geflecht 12 gegenüber dem Schutzschlauch 6 geschützt. Der Schutzschlauch 6 ist in dieser Ausbildung als Ringwellschlauch ausgebildet und weist an seiner Außenfläche abwechselnd umlaufende Wülste und Nuten aus, deren Abstand durch ein vorbestimmtes Teilungsmaß festgelegt ist. Innerhalb des Klemmbereiches 8 ist seitens des Krümmers 1 eine umlaufende Wulst 10 angeordnet, die in eine Nut des Schutzschlauches 6 eingreift. Ein Befestigungsteil 15 ist dabei so angeordnet, daß sein eines Ende in den Überlappungsbereich 8 hineinragt und mit einer Innenwulst 13 in eine Nut des Schutzschlauches 6 eingreift. Dieses Befestigungsteil 15 weist in regelmäßigen, der Hülle 6 angepaßten Abständen weitere Innenwülste auf. Den Übergang vom Befestigungsteil 15 zum Steckverbinder 3 bildet ein Übergangsteil 16. Am anderen Ende des Befestigungsteils 15 befindet sich eine Innenwulst 14, die in eine Nut 17 des Übergangsteils 16 eingreift. An diesem Ende des Befestigungsteils 15 ist die aufgrund der Teilung zu erwartende vorletzte Wulst weggelassen. Diese Teilungslücke ergibt Vorteile bei der Dimensionierung der Wandstärke in der Umgebung der Nut 17, wenn die Hülle eine sehr kleine Teilung aufweist. Bei größeren Teilungen ist dies nicht erforderlich. Das Befestigungsteil 15 besteht, wie der Krümmer 1, ebenfalls aus zwei Halbschalen, die auch durch ein Spannelement zusammengehalten werden. Diese beiden Halbschalen sind im Gegensatz zu den Halbschalen 4, 5 des Krümmers 1 identische Teile. Hier ist das Spannelement durch eine Spannschelle 18 verwirklicht. Am freien Ende des Krümmers 1 ist dieser durch einen weiteren Kabelbinder 11 zusammengespannt. Dadurch, daß der Krümmer 1 aus zwei Halbschalen 4, 5 besteht, kann dieser bei einem bereits montiertem Kabelbaum 2 leicht demontiert und erneuert werden.

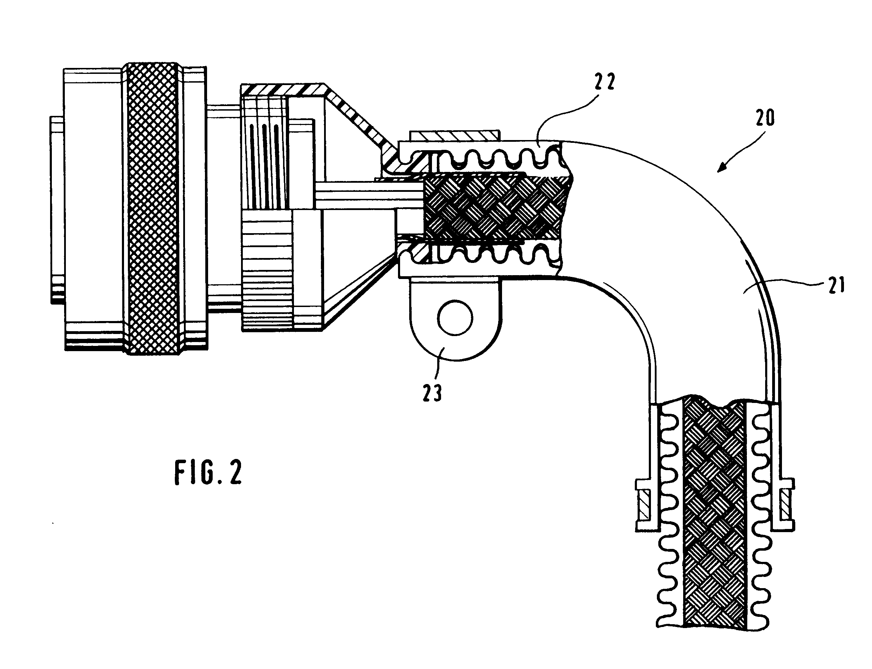

Bei einem weiteren Krümmer 20 gemäß Fig. 2, der aus Halbschalen 21, 22 besteht, ist abweichend von der Ausgestaltung nach Fig. 1 das Befestigungsteil hier mit dem Krümmer 20 einteilig verbunden. Hierdurch wird die Anzahl der erforderlichen Einzelteile weiter reduziert. Am festen Ende des Krümmers 20 entfallen ein Kalbebinder sowie zwei Halbschalen.

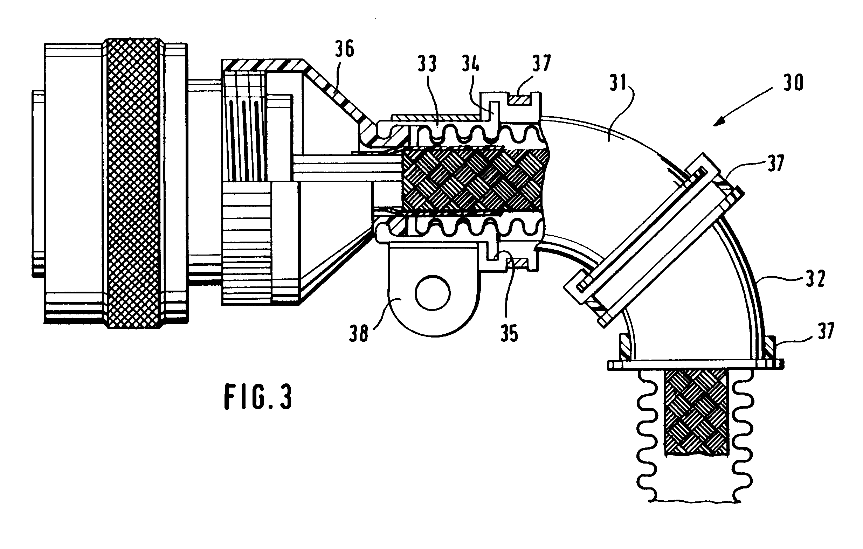

Bei einer weiteren Ausführung gemäß Fig. 3 wird ein Krümmer 30 aus zwei Teilkrümmern 31 und 32 zusammengesetzt. Diese Krümmer 30 und das Befestigungsteil 33 bestehen jeweils aus zwei Halbschalen. Die Verbindung des Befestigungsteiles 33 am Übergangsteil 36 ist wie vorbeschrieben ausgebildet. An seinem einen Ende weist das Befestigungsteil 33 einen Flansch 34 auf, dem ein Ende des Krümmers 31 angepaßt und eine Nut 35 vorgesehen ist. In gleicher Weise ist der Krümmer 32 mit dem Krümmer 31 verbunden. Die Fixierung der Anordnung geschieht durch Kabelbinder 37 bzw. eine Spannschelle 38. Die Halbschalen der Krümmer 31 und 32 sind identische Teile. Infolge der Zusammensetzbarkeit sind auch baukastenmäßig unterschiedliche Krümmerformen herstellbar.

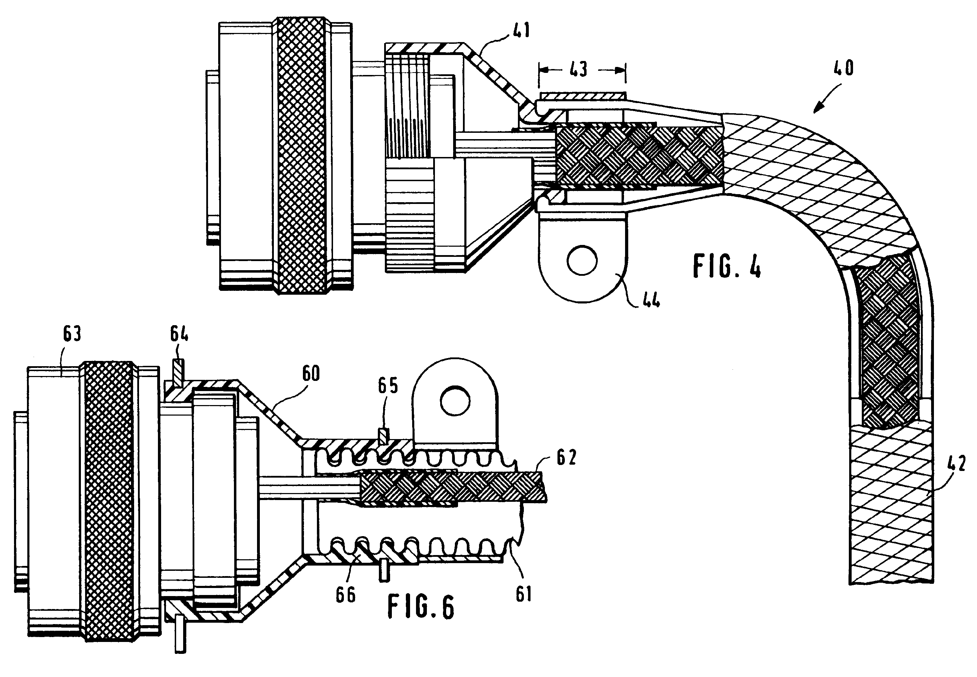

In Fig. 4 ist ein Krümmer 40 für ein Endgehäuse 41 bestehend aus zwei Halbschalen dargestellt. Der Schutzschlauch ist hier als Geflecht 42 ausgebildet und von außen über den Krümmer 40 gezogen. Die Befestigung des Geflechts 42 im Klemmbereich 43 erfolgt durch eine Schelle 44.

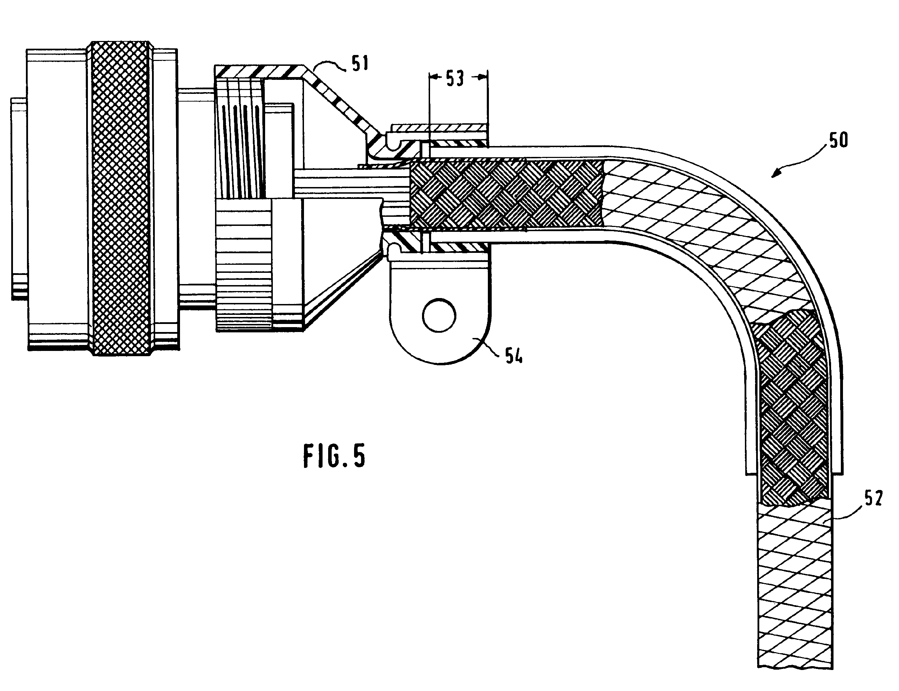

Ein weiterer Krümmer 50 für ein Endgehäuse 51 ist in Fig. 5 dargestellt. Der Krümmer 50 besteht wieder aus zwei Halbschalen und der Schutzschlauch ist als Geflecht 52 ausgebildet. Das Geflecht 52 ist innen durch den Krümmer 50 geführt und die Befestigung erfolgt in einem Klemmbereich 53 durch eine Schelle 54, wobei das Geflecht 52 nach außen über das Ende des Krümmers 50 gestülpt ist.

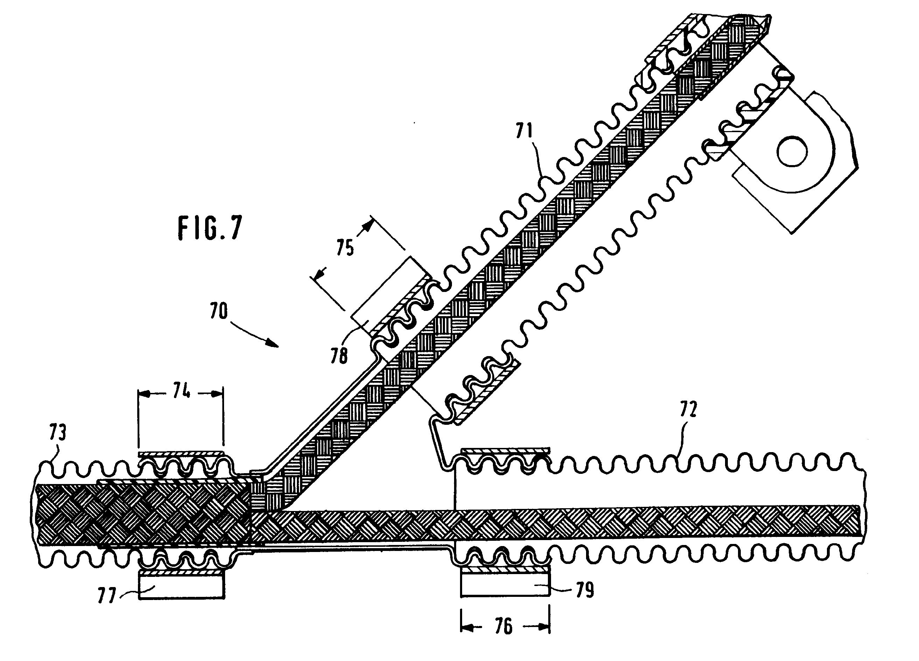

Gemäß Fig. 6 ist ein Formstück in Gestalt eines Endgehäuses 60 ausgebildet, wobei ein Schutzschlauch 61 eines Kabelbaumes 62 mit einem Steckverbinder 63 verbunden ist. Das Endgehäuse 60 besteht wiederum aus zwei Halbschalen, wobei die Spannelemente als Sprengringe 64, 65 ausgebildet sind.

Bei einer Ausbildung gemäß Fig. 7 ist ein als Verteilerstück 70 ausgebildetes Formstück dargestellt. Als Schutzschlauch werden Wellschläuche 71, 72, 73 verwendet, wobei das Verteilerstück 70 zweiteilig ausgeführt und in den Klemmbereichen 74, 75, 76 an die Form der Wellschläuche 71, 72, 73 angepaßt ist. Als Spannelemente dienen dabei Einohrringe 77, 78, 79. Anstatt der Wellschläuche 71, 72, 73 können selbstverständlich auch Ringwellschläuche oder Wendelschläuche eingesetzt werden.

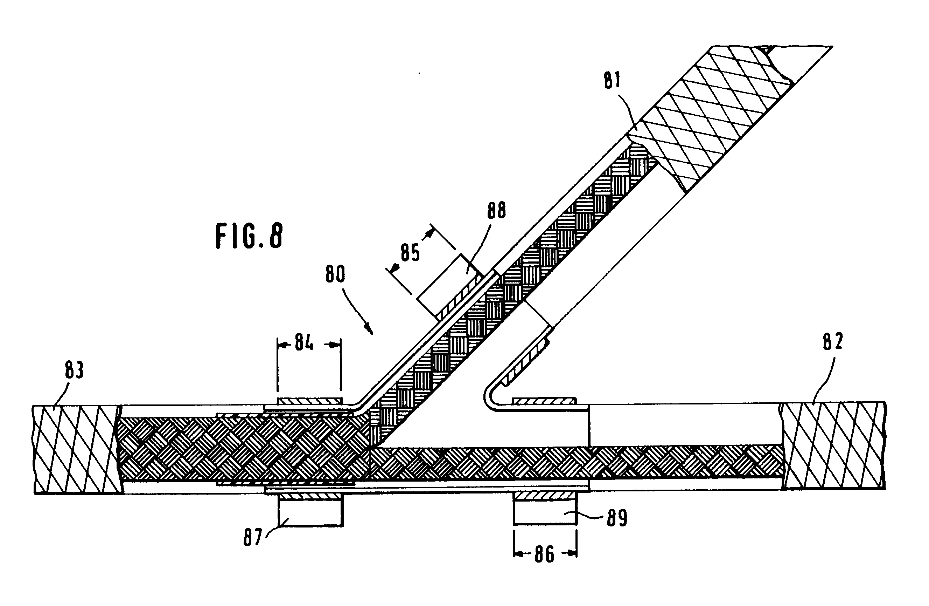

Ein weiteres Verteilerstück 80 als zweiteiliges Formstück ist aus der Fig. 8 zu entnehmen. Als Schutzschlauch werden hierbei Geflechte 81, 82, 83 verwendet, die in den Klemmbereichen 84, 85, 86 über das Verteilerstück 80 gezogen werden und über Spannelemente in Form von Einohrringen 87, 88, 89 festgelegt werden.

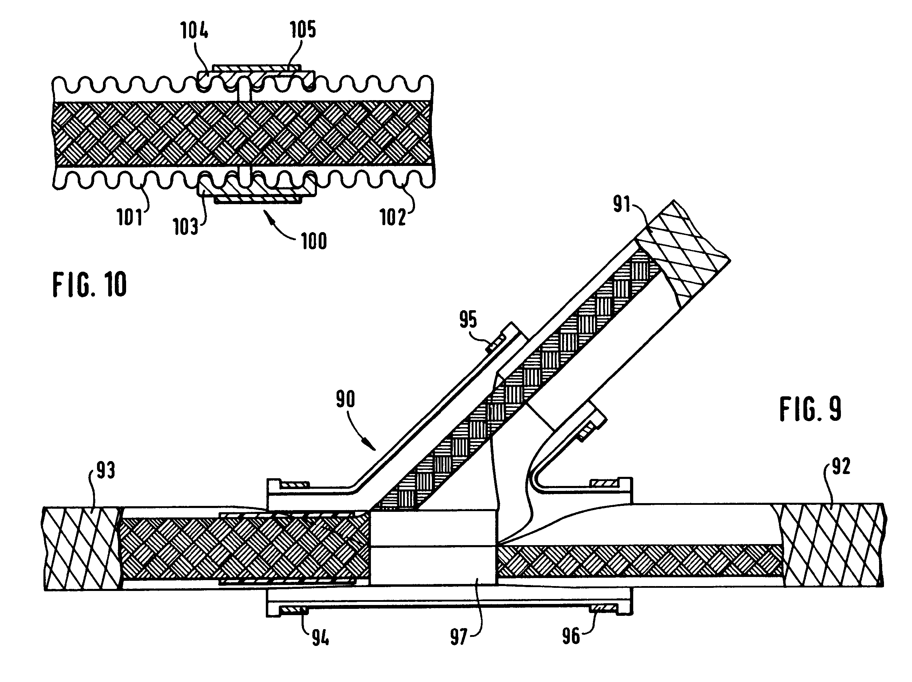

Fig. 9 zeigt ein als zweiteiliges Verteilerstück 90 ausgebildetes Formstück, wobei ebenfalls als Schutzschlauch Geflechte 91, 92, 93 verwendet werden. Die Hälften des Verteilerstückes 90 werden mittels Spannelemente miteinander verbunden, die als Kabelbinder 94, 95, 96 ausgebildet sind. Die Enden der Geflechte 91, 92, 93 sind ausgekämmt und sind mittels Quetschverbinders 97 miteinander verbunden. Anstelle eines Quetschverbinders 97 kann auch eine Lötmuffe verwendet werden.

Ein Formstück als Muffe 100 ist gemäß Fig. 10 dargestellt und dient zur Verbindung zweier Wellschläuche 101, 102. Die Muffe 100 besteht aus zwei Halbschalen 103, 104, deren Innenflächen an die Form der Wellschläuche 101, 102 angepaßt sind. Als Spannelement dient ein Quetschring 105. Eine nicht gezeigte Ausgestaltung besteht darin, daß anstelle des Quetschringes 105 ein Schrumpfring verwendet wird.

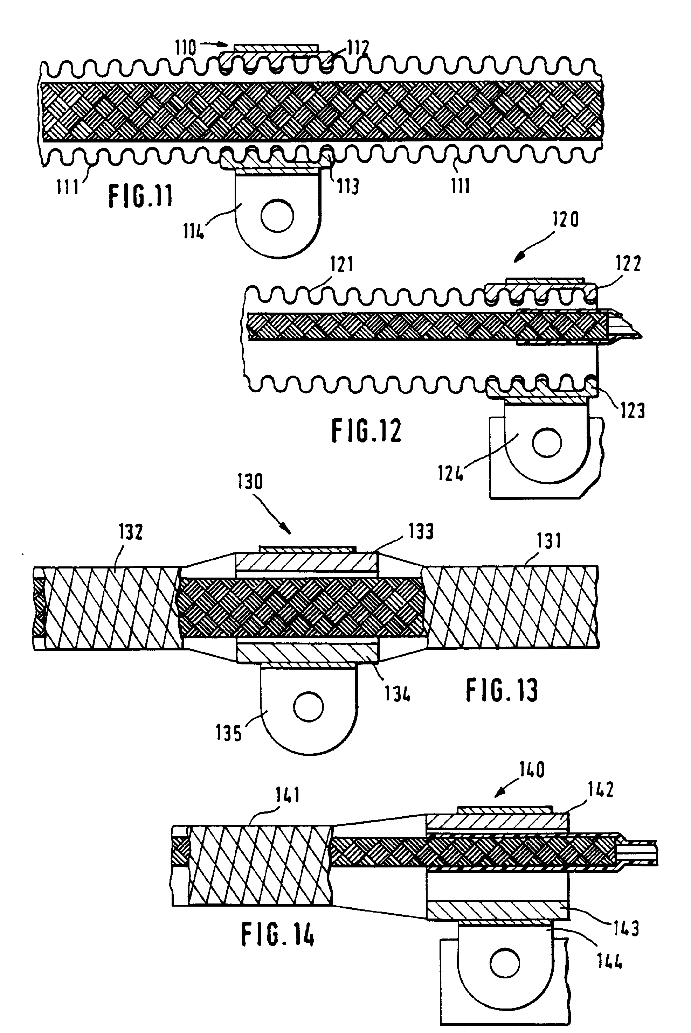

Ein weiteres Formstück gemäß Fig. 11 als Muffe 110 besteht aus zwei Halbschalen 112, 113, deren Innenflächen an die Form eines Wellschlauches 111 angepaßt sind. Zur elektrischen Verbindung des Wellschlauches 111 ist eine Ableitschelle 114 vorgesehen, so daß eine Verbindung zwischen dem Schlauch 111 und Masse herstellbar ist.

Fig. 12 zeigt ein Formstück, das als Endbefestigung 120 ausgebildet ist und zur Festlegung des Endes eines Wellschlauches 121 dient. Das Formstück 120 besteht aus zwei Halbschalen 122, 123, die auf das Ende des Schlauches 121 gesetzt und mittels einer Schelle 124 festgespannt sind. Damit ist auch eine elektrische Verbindung zwischen dem Schlauch 121 und Masse herstellbar.

Das Formstück gemäß Fig. 13 ist als Muffe 130 ausgebildet und dient zur mechanischen und elektrischen Verbindung zweier Geflechte 131, 132 und zugleich zur Herstellung eines Masseanschlusses anhand einer Ableitschelle 135. Die Muffe 130 besteht aus zwei Halbschalen 133, 134, worüber die Geflechte 131, 132 geschoben und mittels der Schelle 135 befestigt sind.

Fig. 14 zeigt ein Formstück, das als Endbefestigung 140 ausgebildet ist und zur Festlegung des Endes eines Geflechtes 141 dient. Das Formstück 140 besteht aus zwei Halbschalen 142, 143, worüber das Ende des Geflechtes 141 geschoben und mittels einer Schelle 144 befestigt ist. Damit ist auch eine elektrische Verbindung zwischen dem Geflecht 141 und Masse herstellbar.

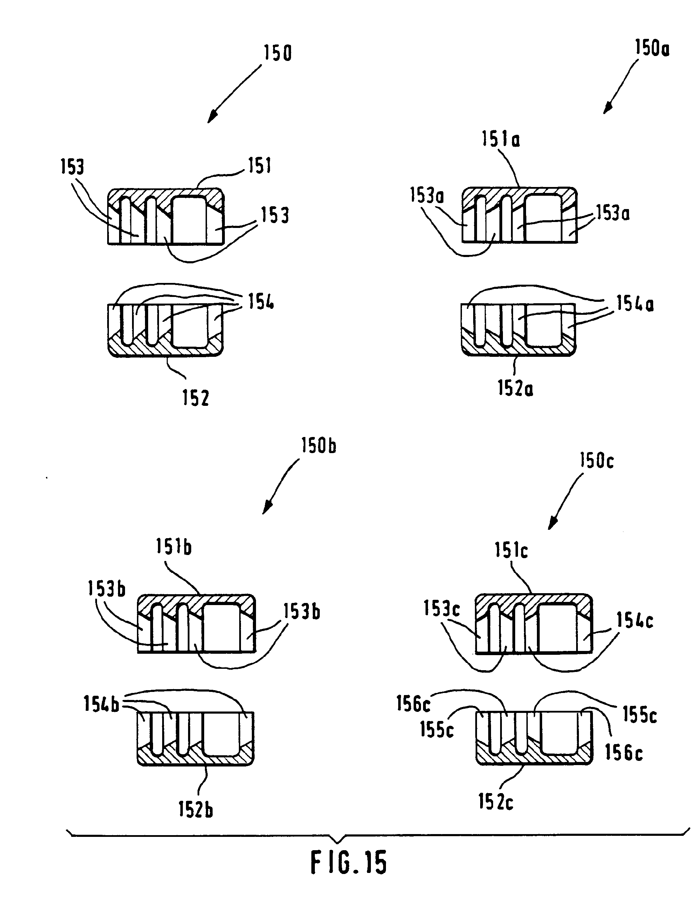

Fig. 15 zeigt verschiedene Ausbildungsformen von Halbschalenpaaren 150, 150a, 150b und 150c, die zur Herstellung einer Muffe, eines Ableitpunktes oder einer Endbefestigung verwendbar sind. Die Innenflächen dieser Halbschalenpaare sind einem Wellschlauch angepaßt. Die Halbschalen 150 und 151 weisen vier Wülste 153 bzw. 154 auf. Abweichend von der durch das Profil des Wellschlauches gegebenen Wellenform zeigen diese Wülste 153, 154 übereinstimmend einen nach rechts abgeschrägten Querschnitt (Sägezahnprofil).

Die Innenflächen des Halbschalenpaares 150a weisen vier Wülste 153a bzw. 154b auf. Jeder dieser Wülste zeigen eine nach links abgeschrägte Sägezahnform.

Die Innenflächen des Halbschalenpaares 150c weisen vier Wülste 153b bzw. 154b auf. Hier sind die Wülste zugleich nach links und nach rechts abgeschrägt, zeigen also eine spitze Querschnittsform.

Die Innenflächen des Halbschalenpaares 150c weisen vier Wülste 153c, 154c, 155c und 156c auf. Diese Wülste zeigen abwechselnd eine nach links und dann nach rechts abgeschrägte Querschnittsform.

Durch die vorgenannten Maßnahmen wird erreicht, daß sich die Wülste der Halbschalen auch bei unterschiedlichen Toleranzen der Wellenteilungen leicht in die betreffenden Nuten einführen lassen. Alle Halbschalen weisen an ihrem rechten Ende eine Teilungslücke auf. Hierdurch können diese Teile außer für die Anordnungen nach den Figuren 10, 11 und 12 auch für die Lösung nach Fig. 1 verwendet werden.

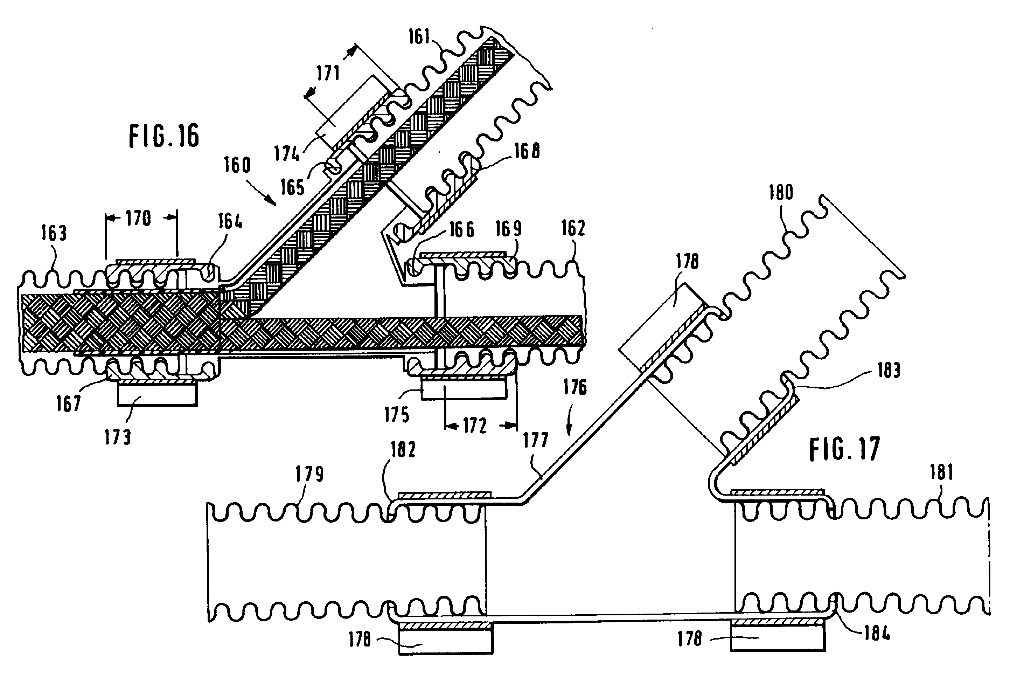

Ein Verteilerstück 160 aus zwei Halbschalen bestehendem Formstück ähnlich Fig. 7 ist in Fig. 16 dargestellt.

Als Schutzschlauch werden Wellschläuche 161, 162, 163 verwendet. An den freien Enden des Verteilerstückes sind Außennuten 164, 165 und 166 angeordnet, in die entsprechende Innenwülste von Befestigungsteilen 167, 168 und 169 eingreifen. Die Innenflächen der Befestigungsteile 167, 168 und 169 sind in den Klemmbereichen 170, 171 und 172 an die Form der Wellschläuche 161, 162, 163 angepaßt. Die Befestigungsteile 167, 168 und 169 bestehen jeweils aus zwei Halbschalen, wie beispielsweise im Zusammenhang mit Fig. 1 oder 15 beschrieben. Als Spannelemente dienen Einohrringe 173, 174 und 175.

Gemäß Fig. 17 ist eine weitere Ausbildung eines aus zwei Halbschalen bestehenden Verteilerstücks 176 mit nur der unteren Halbschale 177 gezeigt. Beide Halbschalen sind durch Einohrklemmen 178 auf das jeweilige Ende eines Schlauches 179, 180, 181 gespannt. Die Halbschalen weisen auch im Überlappungsbereich mit den Schläuchen 179, 180, 181 eine glatte zylindrische Form auf, wobei jedoch am jeweiligen Ende der Schale eine in eine Rille des Schlauchprofils eingreifende Bördelung 182, 183, 184 vorgesehen ist. Hierdurch werden die Schläuche gegenüber den Halbschalen in axialer Richtung gesichert. Der feste Sitz der Verbindung ergibt sich durch das Festziehen der Einohrklemmen 178. Die genannte glatte Form der Halbschalen bietet Vorteile bei deren Herstellung und Montage.

Die vorgenannten Formstücke können aus unterschiedlichen Werkstoffen hergestellt werden. Dabei richtet sich deren Auswahl nach dem Zweck der jeweiligen Hüllen. Dienen die betreffenden Hüllen beispielsweise zum mechanischen Schutz eines Kabelbaumes, so werden aus Kunststoff bestehende Hüllen vorgesehen. In diesem Falle ist es ausreichend, wenn auch die entsprechenden Formstücke aus Kunststoff bestehen. Wenn eine Abschirmung des Kabelbaumes gegen elektromagnetische Einflüsse erreicht werden soll, besteht die betreffende Hülle, Schlauch oder Geflecht, aus einem geeigneten Metall. In diesen Fällen müssen auch bestimmte Teile der Formstücke elektrisch leitend sein und werden daher zweckmäßig aus Metall bzw. aus einem elektrisch leitenden Kunststoff hergestellt. Zum Schutz eines Kabelbaumes gegen durch Blitzeinschlag verursachte Stromspitzen ist dieser in den durch Blitzschlag gefährdeten Bereichen an bestimmten Stellen mit Ableitpunkten zu versehen. Aufgrund der erfindungsgemäßen Gestaltung der Formstücke wird die Möglichkeit eröffnet, gezielt nur die Teile aus Metall oder elektrisch leitendem Kunststoff herzustellen, von denen in Abhängigkeit vom Verwendungszweck eine elektrische Leitfähigkeit gefordert wird. Alle anderen Teile können aus elektrisch nicht leitendem Kunststoff hergestellt werden. Hierdurch können erhebliche Gewichtsvorteile erzielt werden.

## Patentansprüche

1. Formstück zur richtungsgebenden Führung flexibler, metallischer Leitungs-Schutzschläuche (6,42,91,92, 93,111,121,141), wie Kabelbäume und dergleichen, insbesondere für den Einsatz in Flugzeugen als Schutz gegen elektromagnetische Einflüsse, das Formstück (1,20,30,40,50, 90,110,120,140) aus zwei Halbschalen (4,5,21,22,112,113, 122,123,142,143) mit einer Trennungsfuge im Bereich der Symmetrieebene gebildet ist und die Schalen (4,5,21,22,112,113, 122,123,142,143) durch mindestens ein Spannelement (9,11,23,37,44, 54,94,95,96,114,124,144) miteinander verbunden sind, **dadurch** **gekennzeichnet,** **daß** der durchlaufende Schutzschlauch (6,42,91,92, 93,111,121,141) von den beiden Halbschalen (4,5,21,22,112,113, 122,123,142,143) umgeben ist und Ihre Innenflächen im Klemmbereich in korrespondierend zum aufgenommenen, als Wellschlauch ausgebildeten Schutzschlauch (6,42,91,92, 93,111,121,141) derart ausgebildet sind, daß mindestens eine Wulst (10) anliegend aufgenommen wird.

2. Formstück nach Anspruch 1, **dadurch gekennzeichnet,** **daß** es den Schutzschlauch (6,42,52) von außen umfaßt und als Krümmer (1,20,30,40,50) ausgebildet ist.

3. Formstück nach Anspruch 2, **dadurch gekennzeichnet,** **daß** der Krümmer (31) einen Flansch zum Anschluß eines weiteren Krümmers (32) aufweist.

4. Formstück nach Anspruch 1, **dadurch gekennzeichnet,** **daß** es als den Schutzschlauch (91,92,93) von außen umgebendes Verteilerstück (90) ausgebildet ist.

5. Formstück nach Anspruch 1, **dadurch gekennzeichnet,** **daß** es den Schutzschlauch (111,121,141) von außen umfaßt und linear ausgebildet ist.

6. Formstück nach einem der Ansprüche 1 bis 5, **dadurch** **gekennzeichnet, daß** seine Innenfläche im Klemmbereich in Sägezahnform (153,154) ausgebildet ist.

7. Formstück nach Anspruch 1, **dadurch gekennzeichnet,** **daß** es in den als Geflecht (42) ausgebildeten Schutzschlauch von innen einsetzbar und mit diesem mittels eines Spannelementes (44) verbindbar ist.

8. Formstück nach einem der Ansprüche 1 bis 7, **dadurch** **gekennzeichnet,** **daß** das Spannelement als Kabelbinder (9,11,94,95,96) ausgebildet ist.

9. Formstück nach einem der Ansprüche 1 bis 7, **dadurch** **gekennzeichnet, daß** das Spannelement als Schelle (23,44,54) ausgebildet ist.

10. Formstück nach einem der Ansprüche 1 bis 9, **dadurch** **gekennzeichnet, daß** das Spannelement als Sprengring (64,65) ausgebildet ist.

11. Formstück nach einem der Ansprüche 1 bis 7, **dadurch** **gekennzeichnet**, **daß** das Spannelement als Quetschring (105) ausgebildet ist.

12. Formstück nach einem der Ansprüche 1 bis 7, **dadurch** **gekennzeichnet, daß** das Spannelement als Schrumpfring ausgebildet ist.

13. Formstück nach einem der Ansprüche 1 bis 7, **dadurch** **gekennzeichnet, daß** das Spannelement als Ohrklemme (44, 45) ausgebildet ist.

14. Formstück nach einem der Ansprüche 1 bis 7, **dadurch** **gekennzeichnet, daß** die Halbschalen (122,123) eine glatte Wandung und eine am Ende in die Rillung des Schlauchprofils eingreifende Bördelung aufweisen.

## Claims

1. Shaped piece for the directional guidance of flexible, metallic line protection tubes (6, 42, 91, 92, 93, 111, 121, 141) such as cable harnesses and the like, in particular for use in aircraft as a protection against electromagnetic influences, which shaped piece (1, 20, 30, 40, 50, 90, 110, 120, 140) is formed by two half shells (4, 5, 21, 22, 112, 113, 122, 123, 142, 143) having a parting line in the region of the plane of symmetry and the shells (4, 5, 21, 22, 112, 113, 122, 123, 142, 143) are connected to one another by at least one clamping element (9, 11, 23, 37, 44, 54, 94, 95, 96, 114, 124, 144), **characterized in that** the continuous protective tube (6, 42, 91, 92, 93, 111, 121, 141) is surrounded by the two half shells (4, 5, 21, 22, 112, 113, 122, 123, 142, 143) and their inner surfaces in the clamping region are constructed in a corresponding manner to the accommodated protective tube (6, 42, 91, 92, 93, 111, 121, 141) in the form of a corrugated tube in such a way that at least one bead (10) is accommodated in a close-lying manner.

2. Shaped piece according to claim 1, **characterized in that** it externally embraces the protective tube (6, 42, 52) and takes the form of an elbow (1, 20, 30, 40, 50).

3. Shaped piece according to claim 2, **characterized in that** the elbow (31) has a flange for the connection of a further elbow (32).

4. Shaped piece according to claim 1, **characterized in that** it takes the form of a distributor piece (90) which externally surrounds the protective tube (91, 92, 93).

5. Shaped piece according to claim 1, **characterized in that** it externally embraces the protective tube (111, 121, 141) and is of a linear construction.

6. Shaped piece according to one of claims 1 to 5, **characterized in that** its inner surface in the clamping region is of a saw-toothed construction (153, 154).

7. Shaped piece according to claim 1, **characterized in that** it is insertable from inside into the protective tube in the form of a braiding (42) and is connectable to said tube by means of a clamping element (44).

8. Shaped piece according to one of claims 1 to 7, **characterized in that** the clamping element takes the form of a cable binder (9, 11, 94, 95, 96).

9. Shaped piece according to one of claims 1 to 7, **characterized in that** the clamping element takes the form of a clamp (23, 44, 54).

10. Shaped piece according to one of claims 1 to 9, **characterized in that** the clamping element takes the form of a snap ring (64, 65).

11. Shaped piece according to one of claims 1 to 7, **characterized in that** the clamping element takes the form of a pinching ring (105).

12. Shaped piece according to one of claims 1 to 7, **characterized in that** the clamping element takes the form of a shrink ring.

13. Shaped piece according to one of claims 1 to 7, **characterized in that** the clamping element takes the form of an eyed clamp (44, 45).

14. Shaped piece according to one of claims 1 to 7, **characterized in that** the half shells (122, 123) have a smooth wall and a beading which at the end engages into the grooves of the tube profile.

## Revendications

1. Pièce de forme pour le guidage directionnel d'un tube de protection de conduite (6, 42, 91, 92, 93, 111, 121, 141), métallique souple telle que les faisceaux de câble ou analogues, notamment pour les applications à bord d'un avion, pour la protection contre les influences magnétiques, la pièce de forme (1, 20, 30, 40, 50, 90, 110, 120, 140) se composant de deux demi-coquilles (4, 5, 21, 22, 112, 113, 122, 123, 142, 143) à plan de joint au niveau du plan de symétrie, les coquilles (4, 5, 21, 22, 112, 113, 122, 123, 142, 143) étant reliées ensemble par au moins un élément de serrage (9, 11, 23, 37, 44, 54, 94, 95, 96, 114, 124, 144), pièce caractérisée en ce que le tube de protection, continu (6, 42, 91, 92, 93, 111, 121, 141) est entouré par les deux demi-coquilles (4, 5, 21, 22, 112, 113, 122, 123, 142, 143) et leurs surfaces intérieures dans la zone de serrage sont réalisées en correspondance avec le tube de protection (6, 42, 91, 92, 93, 111, 121, 141) en forme de tube ondulé, qu'elles reçoivent, de façon qu'au moins un bourrelet (10) soit logé en appui.

2. Pièce de forme selon la revendication 1, caractérisée en ce qu'elle entoure extérieurement le tube de protection (6, 42, 52) et est réalisée sous la forme d'un coude (1, 20, 30, 40, 50).

3. Pièce de forme selon la revendication 2, caractérisée en ce que le coude (31) comporte une bride pour le raccordement à un autre coude (32).

4. Pièce de forme selon la revendication, caractérisée en ce qu'elle est réalisée sous la forme d'une pièce de distribution (90) qui entoure extérieurement le tube de protection (91, 92, 93).

5. Pièce de forme selon la revendication 1, caractérisée en ce qu'elle entoure de l'extérieur le tube de protection (111, 121, 141) et est réalisée de manière linéaire.

6. Pièce de forme selon l'une des revendications 1 à 5, caractérisée en ce que sa surface intérieure est en forme de dents de scie (153, 154) dans la zone de serrage.

7. Pièce de forme selon la revendication 1, caractérisée en ce qu'elle peut s'introduire de l'intérieur dans le tube de protection réalisé en forme de tresse (42) pour être reliée à celui-ci à l'aide d'un élément de serrage (44).

8. Pièce de forme selon l'une des revendications 1 à 7, caractérisée en ce que l'élément de serrage est réalisé sous forme d'organe de liaison de câble (9, 11, 94, 95, 96).

9. Pièce de forme selon l'une des revendications 1 à 7, caractérisée en ce que l'élément de serrage est réalisé sous forme de collier (23, 44, 54).

10. Pièce de forme selon l'une des revendications 1 à 9, caractérisée en ce que l'élément de serrage est réalisé sous forme de bague élastique (64, 65).

11. Pièce de forme selon l'une des revendications 1 à 7, caractérisée en ce que l'élément de serrage est réalisé sous forme de bague sertie (105).

12. Pièce de forme selon l'une des revendications 1 à 7, caractérisée en ce que l'élément tendeur est réalisé sous forme de bague rétractable.

13. Pièce de forme selon l'une des revendications 1 à 7, caractérisée en ce que l'élément tendeur est réalisé sous forme de pince à oreille (44, 45).

14. Pièce de forme selon l'une des revendications 1 à 7, caractérisée en ce que les demi-coquilles (122, 123) ont une paroi lisse et une partie rabattue à l'extrémité, pénétrant dans les ondulations du tube profilé.
